# EUROPÄISCHE PATENTANMELDUNG

(11) **EP 1 788 356 A2**
(43) Veröffentlichungstag der Anmeldung: **23.05.2007**
(21) Anmeldenummer: 06122721.1
(22) Anmeldetag: 23.10.2006
(51) Int. Cl.: G01C 21/36

(54) **Verfahren zur Darstellung einer Karte auf einem Bildschirm eines Navigationssystems sowie ein entsprechendes Navigationssystem**

(30) Priorität: 16.11.2005 DE 102005054580
(71) Anmelder: ROBERT BOSCH GMBH, 70442 Stuttgart (DE)
(72) Erfinder: Jung, Thomas, 33613, Bielefeld (DE)

(57) **Zusammenfassung**

Um bei einem Verfahren zur Darstellung einer Karte auf einem Bildschirm eines Navigationssystems die Qualität der Darstellung zu verbessern, wobei eine Fläche der Karte aus Kacheln (1) zusammengesetzt wird, ist vorgeschlagen, dass mehrere ähnlich strukturierte Kacheln (1) erzeugt und zufällig aneinandergereiht werden. Des Weiteren wird ein entsprechend ausgebildetes Navigationssystem angegeben.

## Beschreibung

### Technisches Gebiet

Die Erfindung betrifft ein Verfahren zur Darstellung einer Karte auf einem Bildschirm eines Navigationssystems, wobei eine Fläche der Karte aus Kacheln zusammengesetzt wird sowie ein entsprechend ausgebildetes Navigationssystem.

### Stand der Technik

Navigationssysteme sind in verschiedenen Ausgestaltungen am Markt erhältlich. Sie können entweder als transportable Geräte ausgeführt sein oder in ein Armaturenbrett eines Kraftfahrzeugs integriert werden. Navigationssysteme verfügen im Allgemeinen über eine Positionsbestimmungseinrichtung zur Bestimmung der Position des Navigationssystems bzw. des damit ausgestatteten Kraftfahrzeugs in an sich bekannter Weise anhand der von GPS- oder zukünftig von Galileo-Satelliten ausgesandten Signale. Ausgehend von dieser Position wird mit Hilfe einer Zielführungseinrichtung ein Weg zu einem vom Nutzer des Navigationssystems vorgegebenen Zielpunkt ermittelt und entsprechende Richtungshinweise optisch und/oder akustisch ausgegeben. Dabei kann auf Informationen bezüglich des Strecken- und Wegenetzes zurückgegriffen werden, die beispielsweise auf einer austauschbaren CD-Rom oder DVD gespeichert sind.

Zur Darstellung der Fahrtroute von der momentanen Position zum gewählten Zielpunkt ist es bekannt, dass auf einem Bildschirm bzw. einem Display des Navigationssystems eine Vektorkarte ausgegeben wird. Dies kann in zweidimensionaler Darstellung erfolgen, das bedeutet in Draufsicht von senkrecht oben, in pseudo-dreidimensionaler Darstellung oder in dreidimensionaler Darstellung in an sich bekannter Weise.

In zweidimensionaler oder pseudo-dreidimensionaler Darstellung werden hierbei Flächen bzw. Ausschnitte der Umgebung um die aktuelle Position des Navigationssystems lediglich mit einem Farbton ohne Struktur wiedergegeben. Beispielsweise kann eine Wasserfläche blau, eine Wiese hellgrün und ein Waldstück dunkelgrün dargestellt werden. Hierdurch wird aber kein hochwertig anmutendes Aussehen der Darstellung erreicht.

Bei einer dreidimensionalen Darstellung können auch Satellitenaufnahmen oder Luftbilder zur realistischen Darstellung der Erdoberfläche, über die sich das Navigationssystem bzw. das Kraftfahrzeug bewegt, herangezogen werden. Hierzu ist allerdings ein separater Datenspeicher mit einer Vielzahl an derartigen Aufnahmen erforderlich und die Synchronisierung mit den Positionsdaten des Navigationssystems erfordertet einen erheblichen Rechenaufwand.

Weiterhin ist es bekannt, dass zur Darstellung von Flächen zusätzlich zu einer farblichen Gestaltung weitere Strukturen und Füllmuster verwendet werden, um beispielsweise bei einer Wasserfläche Wellen anzudeuten. Hierzu werden die Flächen jeweils in gleich große Kacheln aufgeteilt, wobei für jede darzustellende Fläche in dem Navigationssystem eine Kachel zum Ausfüllen der gesamten Fläche als Muster hinterlegt ist. Soll nun eine aus mehreren Kacheln bestehende Fläche dargestellt werden, so werden alle diese Kacheln mit der hinterlegten Darstellung einer Musterkachel ausgefüllt, wobei hier auch Strukturen und Füllmuster für die Kachel vorgesehen sein können.

Als nachteilig hierbei ist jedoch anzusehen, dass somit das einzige Kachelmuster sich auf der gesamten Fläche ständig wiederholt, so dass insbesondere das Kachelmuster, in das die Fläche aufgeteilt ist, durch diese Wiederholungen sichtbar wird und dementsprechend ein schlechter optischer Eindruck erzielt wird. Eine solche zusammengesetzte Fläche wird auch als Rapport bezeichnet.

Ausgehend von diesem Stand der Technik liegt der Erfindung die Aufgabe zugrunde, ein Verfahren zur Darstellung einer Karte der Eingangs genannten Art zu schaffen, mit dem Flächen unter geringem Rechenaufwand aufgefüllt werden können. Des Weiteren soll ein entsprechend ausgebildetes Navigationssystem angegeben werden.

Diese Aufgaben werden durch die Merkmale der Ansprüche 1 und 4 gelöst.

Der Kerngedanke der Erfindung besteht darin, dass in dem Navigationssystem für jede verschiedene darzustellende Fläche mehrere ähnlich strukturierte Kacheln erzeugt werden bzw. hinterlegt sind. Insbesondere weisen diese Kacheln jeweils nahezu das gleiche Muster auf. Vorteilhafterweise ist vorgesehen, dass "randlos" angelegte Kacheln konzipiert werden, die vertikal ebenso wie horizontal kombiniert werden können. Mit Hilfe eines vom Fachmann beliebig wählbaren zufälligen Verfahrens werden diese Kacheln neben- und übereinander gelegt, um somit eine größere Fläche ohne wesentliche Musterwiederholungen zu erhalten. Die randlosen Kacheln werden hierzu manuell auf folgende Art und Weise erstellt. Zunächst wird die Textur der Fläche (Wasser, Wiese ...) für den gesamten Bildschirm erzeugt, entsprechend dem Design und den Vorgaben. Aus dieser Fläche wird danach eine Kachel ausgestanzt, die für die spätere Füllung dienen soll. Diese Kachel muss nun an den Rändern so bearbeitet werden, dass sie für einen Rapport fähig ist. Dafür wird die Kachel um 50% nach unten und rechts verschoben, wobei die herausgeschobenen Teile an der gegenüberliegenden Seite wieder hineingeschoben werden. Damit sind alle Kanten in der Bildmitte. Diese können dann so bearbeitet werden (Retusche), dass diese nicht mehr sichtbar sind, d.h. Versetzungen nicht mehr existieren. Danach wird die Verschiebeoperation rückgängig gemacht. In einem weiteren Schritt werden diese Kacheln vervielfältigt und der Innenraum dieser Grafiken leicht modifiziert, so dass bei einem Rapport der original und modifizierten Kacheln kein Muster entsteht.

Es ist für den Fachmann ersichtlich, dass das Navigationsgerät entsprechend hard- und/oder softwaremäßig ausgelegt ist, um entweder für jede Fläche eine geringe Anzahl an Kacheln mit geringfügig unterschiedlichen Mustern zu erzeugen bzw. diese vorgegebenen Kacheln in einem zugehörigen Speicher zu hinterlegen und bei der Darstellung einer derartigen Fläche abzurufen und mit Hilfe eines Zufallgenerators die Kacheln aneinander anzusetzen.

Im Rahmen der Erfindung kann die Form der Kacheln beliebig gewählt werden, in einfacher Weise sind diese quadratisch. Beispielsweise können für jede Fläche drei ähnlich gemusterte Kacheln erzeugt werden.

Der Vorteil der Erfindung besteht darin, dass eine optisch nahezu kachelfreie bzw. rapportfreie Struktur zur Darstellung einer Fläche bzw. Karte auf einem Bildschirm eines Navigationssystems erhalten wird, wobei aufgrund der geringen Anzahl der verschiedenen Kacheln hierzu nur wenig Speicher- bzw. Rechenbedarf erforderlich ist. Auch das Ausführen eine Zufallsverfahrens zur Aneinanderreihung der wenigen verschiedenen Kacheln kann ohne erheblichen Aufwand durchgeführt werden.

Zudem müssen nicht alle verschiedenen auf dem Bildschirm darzustellenden Strukturen in voller Bildschirmauflösung vorgehalten werden sondern können jeweils aus einer geringen Anzahl an Kacheln erzeugt werden. Dies kann selbstverständlich für verschiedene auf dem Bildschirm wiederzugebende Maßstäbe einer Karte erfolgen. Mit einer solchen kachelfreien Struktur kann ein höherwertigeres Aussehen der dargestellten Karte erreicht werden. Außerdem ist ein Maskeneffekt, wie er bei gleichartigen Kacheln, die aneinandergereiht sind und so zu einem Rapporteffekt führen, auftritt, praktisch vermieden. Dies würde nämlich ein Muster entstehen lassen, das beim Drehen sichtbar würde. Demgegenüber ist dass beim Drehen der Karte auf dem Bildschirm das sich mitdrehende erfindungsgemäße Füllmuster der Kacheln nicht mehr erkennbar ist.

Es versteht sich, dass beispielsweise für eine Fläche "Wasser" jeweils andere Kacheln erzeugt bzw. hinterlegt sind, als für eine Fläche "Wald" oder "Wiese".

Vorteilhafte Ausgestaltungen der Erfindung sind jeweils in den Unteransprüchen gekennzeichnet.

In einer vorteilhaften Ausführungsform, die in den Ansprüchen 2 und 4 angegeben ist, werden die Kacheln derart strukturiert, dass sie jeweils eine randlose und übergangsfreie Aneinanderreihung ermöglichen. Hierzu werden insbesondere solche Muster bzw.

Strukturen der Kacheln gewählt, die sich in den Randbereichen der Kacheln jeweils hochgradig ähneln bzw. praktisch identisch sind, um in diesen Übergangsbereichen keine Versetzungen oder dergleichen beim Aneinanderreihen der Kacheln zu erhalten. Durch das Aneinanderreihen mehrerer verschiedener Kacheln wird das Auftreten von Wiederholungsmustern vermieden.

Zur Darstellung einer Fläche auf einem Bildschirm eines Navigationssystems wird entsprechend den Ansprüchen 3 und 6 die Fläche in Form eines Polygonzugs aus einer vorstehend beschriebenen größeren aus verschiedenen Kacheln zusammengesetzten Fläche ausgestanzt. Wie an sich bekannt wird jede der darzustellenden Flächen einer Karte in Form eines Polygonzugs beschrieben, um die darzustellende Fläche in einfacher Weise rechentechnisch handhaben zu können. Zur Ausfüllung der Fläche beispielsweise mit den Merkmalen eines Gewässers werden die entsprechenden Kacheln mit Hilfe eines Zufallsgenerators aneinandergereiht und aus einer solchen größeren Fläche der darzustellende Polygonzug beispielsweise eines Flusses oder Sees ausgestanzt und als Darstellung der Karte auf dem Bildschirm des Navigationsgeräts wiedergegeben.

### Kurzbeschreibung der Zeichnungen

Eine Ausführungsform der Erfindung wird nachstehend anhand der Zeichnungen näher erläutert. Es zeigen in rein schematischen Darstellungen:
Figur 1 drei Darstellungen aus dem Stand der Technik,
Figur 2 ein kachelfreies Muster, und
Figur 3 drei ähnliche Kacheln.

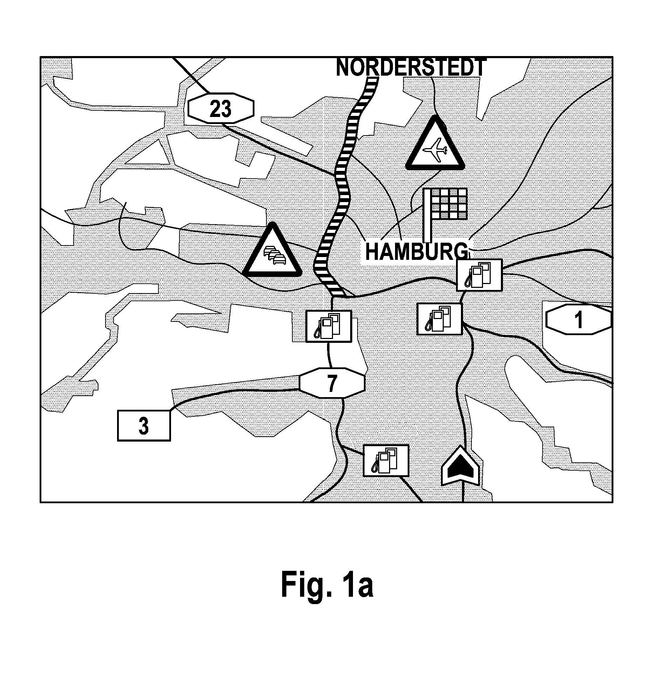

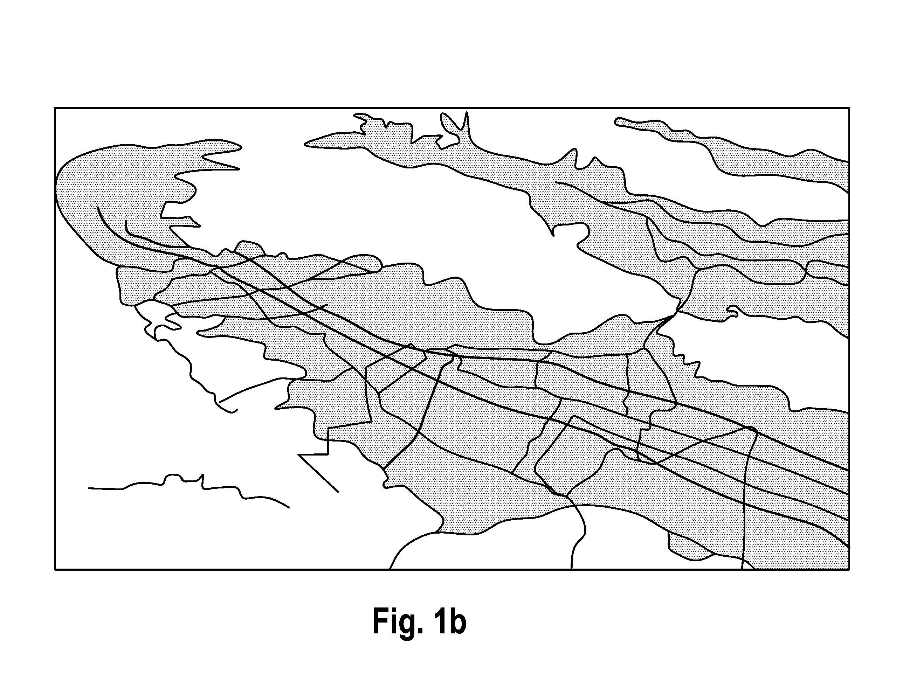

Den drei Abbildungen in Figur 1 sind verschiedene Darstellungen auf einem Bildschirm oder einem Display eines Navigationssystems entnehmbar. Dabei ist in Figur 1a eine zweidimensionale Vektorkarte mit einfacher Flächenfüllung entnehmbar, entsprechend einer Draufsicht von senkrecht oben.

In Figur 1b ist eine dreidimensionale Vektorkarte dargestellt, bei der mit Hilfe von Satelliten- oder Luftaufnahmen die Flächen der Umgebung um das Navigationssystem in einer Ansicht von schräg oben wiedergegeben sind. In Figur 1c ist ein Kachelmuster bei einer zweidimensionalen Darstellung wiedergegeben, wobei eine Fläche jeweils nur mit einer immer wiederkehrenden Kachel 1 ausgefüllt ist, so dass hier Wiederholungen im Kachelmuster erkennbar sind.

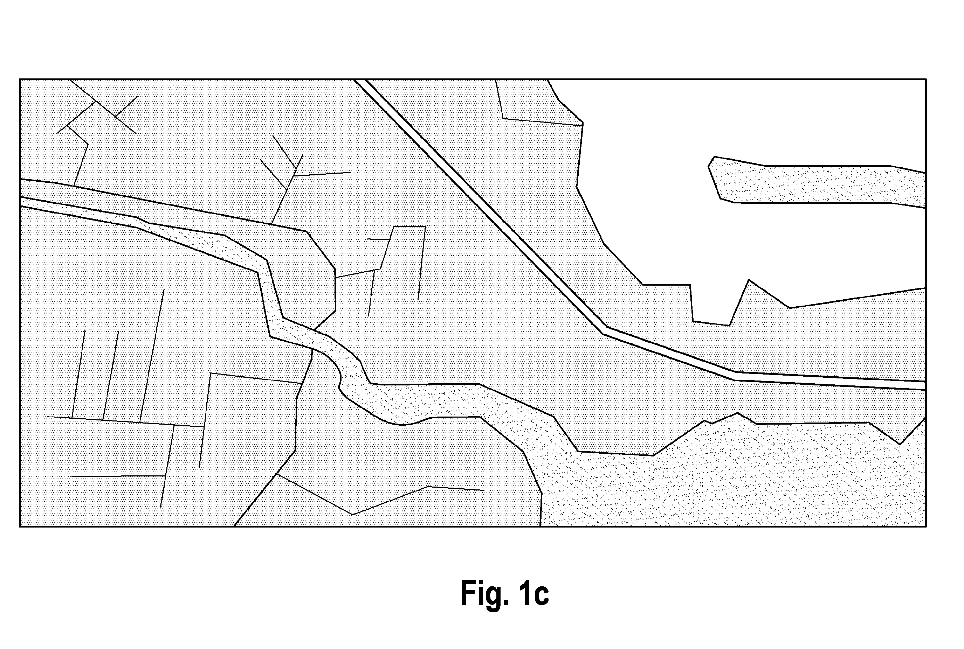

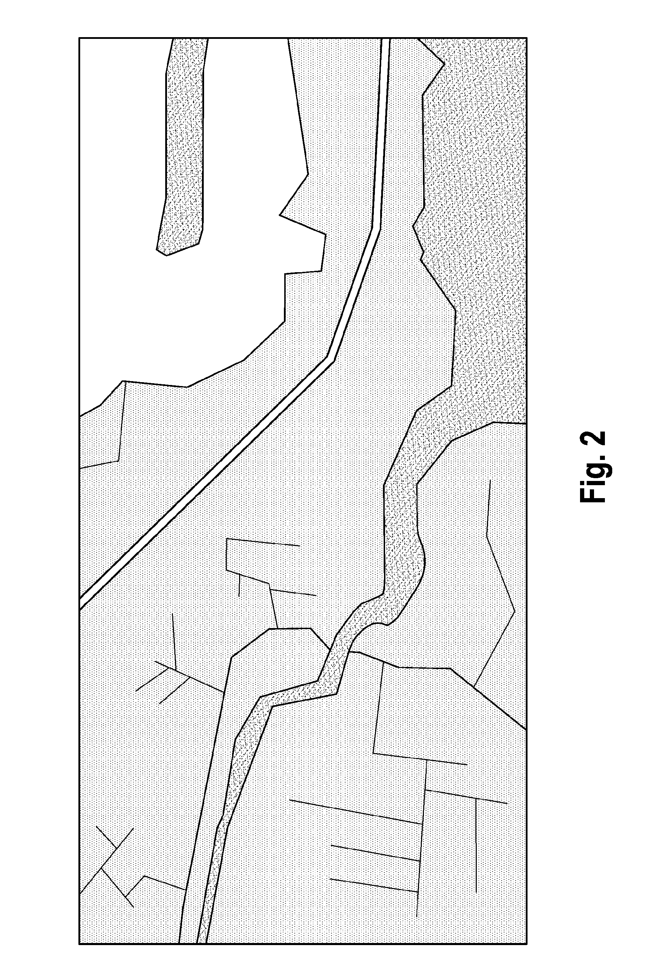

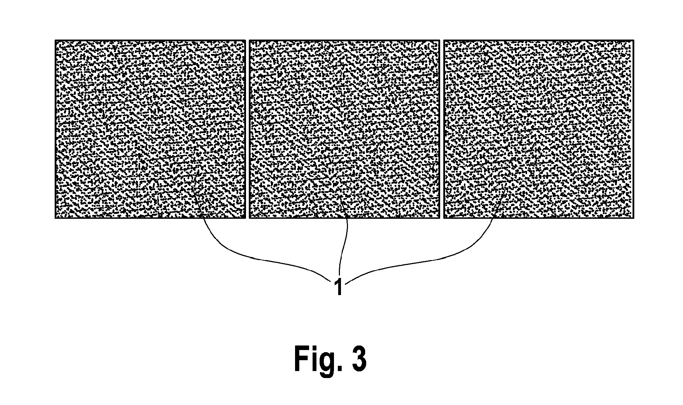

Demgegenüber ist in Figur 2 ein kachelfreies Muster wiedergegeben, wie es unter Verwendung von beispielsweise drei ähnlich gemusterten Kacheln 1, wie aus Figur 3 ersichtlich, erzeugbar ist. Durch die Verwendung lediglich einer geringen Anzahl an ähnlichen Kacheln 1, die vorzugsweise derart gemustert bzw. strukturiert sind, dass sie randlos bzw. ohne Übergänge aneinandergereiht werden können, ist insbesondere die benötigte Rechenkapazität zum Ausfüllen einer Fläche bei einer Darstellung einer Karte auf einem Bildschirm eines Navigationssystems verringert.

Hierzu ist vorzugsweise das Navigationssystem derart ausgelegt, dass verschiedene ähnlich gemusterte Kacheln 1 entweder in einem entsprechenden Speicher des Navigationssystems hinterlegt oder mit Hilfe einer Kachelerzeugungseinrichtung erzeugt werden können. Anschließend werden die Kacheln 1 mit Hilfe eines Zufallsgenerators nach einem zufälligen Verfahren über- und nebeneinander aneinandergereiht und ein Polygonzug entsprechend der darzustellenden Fläche aus dieser größeren Fläche ausgeschnitten und am Bildschirm bzw. Display des Navigationsgeräts als Teil einer Karte ausgegeben. Dies kann auch in verschiedenen Maßstäben erfolgen.

## Patentansprüche

1. Verfahren zur Darstellung einer Karte auf einem Bildschirm eines Navigationssystems, wobei eine Fläche der Karte aus Kacheln (1) zusammengesetzt wird, **dadurch gekennzeichnet, dass** mehrere ähnlich strukturierte Kacheln (1) erzeugt und zufällig aneinandergereiht werden.

2. Verfahren nach Anspruch 1, **dadurch gekennzeichnet, dass** die Kacheln (1) derart strukturiert werden, dass eine randlose und übergangsfreie Aneinanderreihung ermöglicht ist.

3. Verfahren nach Anspruch 1 oder 2, **dadurch gekennzeichnet, dass** aus einer aus Kacheln (1) zusammengesetzten Fläche ein Polygonzug ausgestanzt wird.

4. Navigationssystem mit einem Bildschirm zur Darstellung einer Karte, wobei eine Fläche der Karte aus Kacheln (1) zusammensetzbar ist, **dadurch gekennzeichnet, dass** mehrere ähnliche strukturierte Kacheln (1) erzeugbar und zufällig aneinanderreihbar sind.

5. Navigationssystem nach Anspruch 4, **dadurch gekennzeichnet, dass** die Kacheln (1) derartig strukturierbar sind, dass eine randlose und übergangsfreie Aneinanderreihung ermöglicht ist.

6. Navigationsgerät nach Anspruch 4 oder 5, **dadurch gekennzeichnet, dass** aus einer aus Kacheln (1) zusammengesetzten Fläche ein Polygonzug ausstanzbar ist.
